**Europäisches Patentamt**

(19) **European Patent Office**

**Office européen des brevets**

(11) Publication number : **0 434 689 B1**

(12) # EUROPEAN PATENT SPECIFICATION

(45) Date of publication of patent specification :
16.08.95 Bulletin 95/33

(51) Int. Cl.⁶ : **H04L 27/14, G11C 11/26**

(21) Application number : **89906916.5**

(22) Date of filing : **22.05.89**

(86) International application number :
**PCT/US89/02180**

(87) International publication number :
**WO 89/12367 14.12.89 Gazette 89/29**

(54) SYNCHRONOUS RECEIVER FOR MINIMUM SHIFT KEYING TRANSMISSION.

(30) Priority : **06.06.88 US 202617**

(43) Date of publication of application :
**03.07.91 Bulletin 91/27**

(45) Publication of the grant of the patent :
**16.08.95 Bulletin 95/33**

(84) Designated Contracting States :
**AT BE CH DE FR GB IT LI LU NL SE**

(56) References cited :
**US-A- 4 359 692**
**US-A- 4 583 048**
**No further relevant documents have been disclosed.**
**ELECTRONIC DESIGN vol. 30, no. 13, June 1982, WASECA pages 109 - 116; J. LELAND LANGSTON: 'uC chip implements high speed modems digitally '**

(73) Proprietor : **MOTOROLA, INC.**
**1303 East Algonquin Road**
**Schaumburg, IL 60196 (US)**

(72) Inventor : **LEITCH, Clifford, D.**
**673 N.W. 111th Way**
**Coral Springs, FL 33071 (US)**
Inventor : **STEEL, Francis, Robert**
**deceased (US)**

(74) Representative : **Lupton, Frederick et al**
**Motorola European Intellectual Property,**
**Midpoint,**
**Alencon Link**
**Basingstoke, Hampshire RG21 1PL (GB)**

EP 0 434 689 B1

## Description

## BACKGROUND OF THE INVENTION

This invention pertains to radio receiver circuits and, more particularly, to a circuit that determines the phase error between the carrier of an MSK modulated signal and the local oscillator of a quadrature receiver circuit.

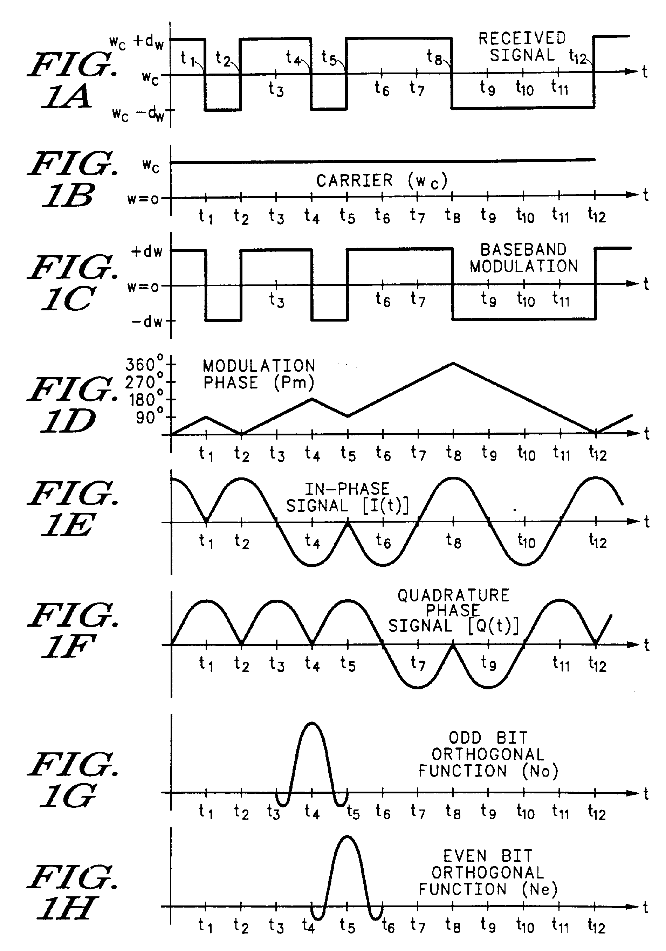

Minimum shift keying (MSK) is a frequency/phase modulation technique which is used to transmit digital data, i.e., binary 1's and 0's. A graph of an arbitrary MSK signal is illustrated in Fig. 1-A in which frequency is plotted on the vertical axis and time on the horizontal axis. Referring to this figure, the transmitter's carrier frequency ($w_c$) is shifted or "deviated" by a specified amount (dw) in one direction to transmit at binary 1, while the carrier frequency is deviated in the opposite direction for a binary 0. For MSK, the deviation (dw) is 1/4th the bit rate.

The convention used throughout this specification is that a binary 1 corresponds to a positive deviation (+dw) while a binary 0 corresponds to a negative deviations (-dw). It should be understood, however, that this convention is arbitrary and, in all cases, the opposite convention may be used.

From US Patent No. 4,583,048 there is known a receiver circuit for use with a quadrature circuit having a baseband signal output and including an oscillator, comprising:

multiplication/integration means for multiplying said baseband signal by an orthogonal function and for integrating the product of said baseband signal and said orthogonal function; angle computing means for computing the phase error between the carrier of said MSK transmission and the output of said oscillator. This known receiver circuit requires the transmission of a known preamble prior to data transmission. Thus, in use of this known receiver, data throughput is compromised by the need to transmit a known preamble.

To synchronously detect a received MSK signal, it is necessary for the receiver to recover the carrier from the signal. But the carrier is suppressed (the signal frequency is either at $w_c$ + dw or $w_c$ - dw, but never at $w_c$), so the receiver must somehow recover the carrier and its phase from the signal.

## SUMMARY OF THE INVENTION

Accordingly, the invention described below provides a means for recovering the carrier phase so that conventional synchronous detection techniques can be employed to demodulate the signal.

In one aspect the invention provides a phase error circuit as claimed in claim 1.

In another aspect the invention provides a receiver circuit as claimed in claim 2.

In a further aspect the invention provides a receiver circuit as claimed in claim 3.

## BRIEF DESCRIPTION OF THE DRAWINGS

Fig. 1 includes a series of eight related graphs (labeled A-H) which illustrate signals that appear at various points in Figs. 2 and 3. The horizontal axes of all eight graphs are identical and are subdivided into twelve divisions of equal time $t_1$-$t_{12}$, wherein each division $t_n$ marks the end of the nth bit of the received MSK signal. A particular graph, for example, Graph C, shall be referred to as Fig. 1-C.

Fig. 2 is a block diagram of one embodiment of the present invention.

Fig. 3 is a block diagram of a second embodiment of the present invention.

Fig. 4 is a flow chart of the phase ambiguity algorithm of Figs. 2 and 3.

## DESCRIPTION OF PREFERRED EMBODIMENTS

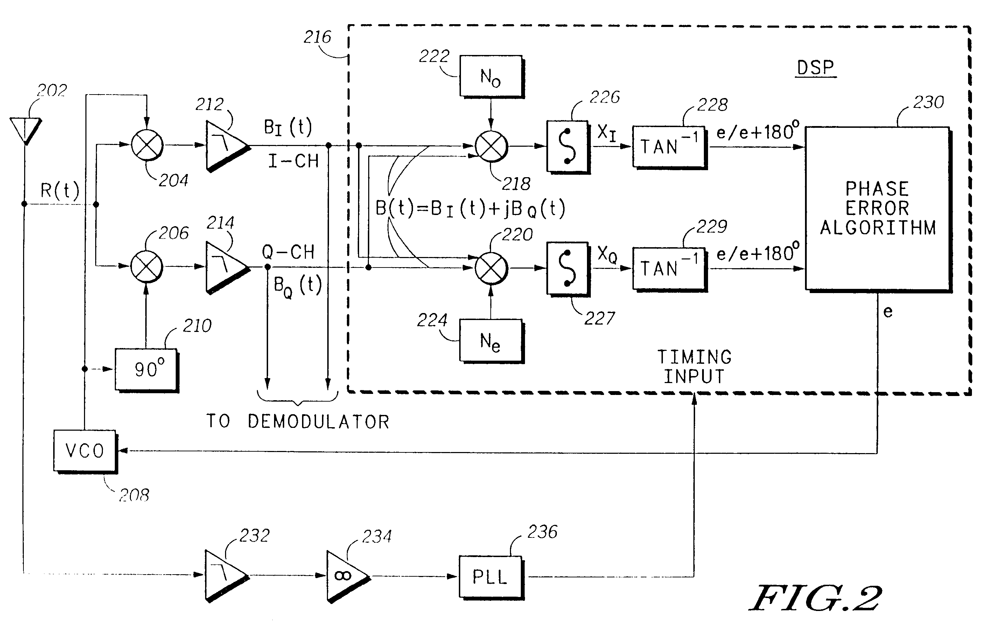

The construction and operation of the embodiment of the invention illustrated in Fig. 2 will be described with reference to Fig. 1, which illustrates signals that appear at various points in the block diagram of Fig. 2. Referring to these figures, an MSK transmission is captured by antenna 202 and coupled to mixers 204 and 206. In a practical application, a receiver "front end" is typically connected between antenna 202 and mixers 204 and 206. This receiver front end would include well known receiver circuits, such as an RF amplifier, a preselecter filter, a mixer, a local oscillator, an IF amplifier, and an IF filter. Since a receiver front end is well known in the art and does not form a part of the claimed invention, it has not been included in Fig. 2.

Oscillator 208 is a controlled oscillator, such as a voltage controlled oscillator (VCO), wherein the phase of its output signal is externally controlled. Ideally, the output signal of oscillator 208 is synchronized in frequency and phase to the carrier of the received MSK signal. A phase shifter 210 shifts the phase of the oscillator output signal by 90°. The received MSK transmission is mixed down to "baseband" in mixers 204 and 206. Low pass filters 212 and 214 are designed to attenuate components of the output signals of mixers 204 and 206 that are at twice the received carrier frequency and above. The output of filter 212 shall be referred to as the "in-phase" or "I-channel", while the output of filter 214 shall be referred to as the "quadrature" or "Q-channel". Mixers 204 and 206, oscillator 208, phase shifter 210, and filters 212 and 214 are interconnected to form a well known quadrature circuit. The operation of the quadrature circuit will now be described with reference to Fig. 1.

Fig. 1-A is a graph of the frequency $w_r(t)$ of a received MSK signal. As explained above, the frequency of the received signal $w_r(t)$ is $w_c$ + dw when a binary 1 is transmitted and $w_c$ - dw when a binary 0 is transmitted, wherein $w_c$ is the carrier frequency and dw is the deviation. It is convenient to view the frequency $w_r(t)$ of the received MSK signal as the composite of a carrier frequency $w_c$ and a baseband modulation frequency $w_m(t)$. The carrier frequency $w_c$ and the baseband modulation frequency $w_m(t)$ are illustarted in Figs. 1-B and 1-C, respectively. Thus, the frequency $w_r(t)$ of the received signal can be described by the following equation:

$$EQ - 1 \qquad w_r(t) = w_c + w_m(t)$$

To describe the operation of the quadrature circuit, it is convenient to work in the time domain. To begin, the received signal R(t) can be described by the following equation:

$$EQ - 2 \qquad R(t) = \cos P_r(t)$$

wherein $P_r(t)$ is the instantaneous phase of the received signal.

It is well known that phase is the integral of frequency. Thus, equation EQ-2 can be re-written as follows:

$$EQ\text{-}3 \qquad R(t) = \cos\left\{ \int_{\tau=0}^{t} \left[ w_r(\tau) \right] d\tau + P_0 \right\}$$

wherein $P_0$ is the instantaneous phase of the received signal at time t=0 and $\tau$ is a dummy variable of integration.

Substituting equation EQ-1 for $w_{r(t)}$ in the above equation yields the following:

$$EQ\text{-}4 \qquad R(t) = \cos\left\{ \int_{\tau=0}^{t} \left[ w_c + w_m(\tau) \right] d\tau + P_0 \right\}$$

Assuming that wc is a constant and that $P_0 = 0$, equation EQ-4 reduces to:

$$EQ\text{-}5 \qquad R(t) = \cos\left\{ w_c t + \int_{\tau=0}^{t} w_m(\tau)\, d\tau \right\}$$

The integral in the above equation is $P_m(t)$, the instantaneous phase of the baseband modulation:

$$EQ\text{-}6 \qquad P_m(t) = \int_{\tau=0}^{t} w_m(\tau)\, d\tau$$

Substituing $P_m(t)$ for the integral in equation EQ-5 yields the following:

$$EQ - 7 \qquad R(t) = \cos[w_c \cdot t + P_m(t)]$$

Ideally, the output of oscillator 208 is phase locked to the carrier frequency of the received signal and, therefore, the equation that describes the output signal LO(t) of oscillator 208 is simply:

$$EQ - 8 \qquad LO(t) = \cos w_c(t)$$

The output of mixer 204 is the multiplication of the received signal (EQ-7) by the oscillator signal (EQ-8), the result of which shall be referred to as the "in-phase" signal I(t):

$$EQ - 9 \qquad I(t) = \{\cos[w_c(t) + P_m(t)]\} \cdot \{\cos w_c(t)\}$$

Using fundamental trigonometric identities for the product of two cosine functions, equation EQ-9 reduces to:

$$EQ - 10 \qquad I(t) = \cos P_m(t) + \cos[2w_c t + P_m(t)]$$

3

(A factor of 1/2 has been ignored in the above equation.)

The output of mixer 204 is low pass filtered by filter 212, which removes the $\cos[2w_ct + P_m(t)]$ component of equation EQ-10. Thus, the in-phase signal I(t) at the output of filter 212 can be described as:

$$* \qquad EQ - 11 \qquad I(t) = \cos P_m(t)$$

In a similar manner, the received signal R(t) is mixed with the carrier frequency in mixer 206, but, in this case, the signal from oscillator 208 is shifted 90° in phase by phase shifter 210. Thus, the output of phase shifter 210 can be described by the function $-\sin(w_ct)$. Applying a similar analysis as above, the output of low pass filter 214 is a quadrature signal Q(t) which can be described by the equation:

$$* \qquad EQ - 12 \qquad Q(t) = \sin P_m(t)$$

By substituting EQ-6 for $P_m(t)$ in equations EQ-11 and EQ-12, one can calculate the in-phase I(t) and quadrature phase Q(t) signals, which are plotted in Figs. 1-E and 1-F, respectively. Although this appears to be a complex calculation, it is greatly simplified by the fact that the baseband modulation frequency $w_m(t)$ can only assume one of two values, either +dw for a binary 1 or - dw for a binary 0. Since dw equals $1/4^{th}$ the bit rate, the phase of the baseband modulation is either advanced by 90° (1/4 · 360°) when $w_m(t) = +dw$, or retarded by 90° when $w_m(t) = -dw$. Thus, it becomes a simple task to plot the phase of the baseband modulation $P_m(t)$ (Fig. 1-D) from the baseband modulation graph of Fig. 1-C. Once $P_m(t)$ is plotted, the signals in the I and Q channels are easily determined by equations EQ-11 and EQ-12, respectively. It should be noted that the in-phase I(t) and quadrature phase Q(t) signals are comprised of a series of half sine functions; the I-channel half sine functions beginning on odd numbered bits and the Q-channel half sine functions beginning on even numbered bits.

So far, we have assumed that the local oscillator is phase locked to the carrier frequency $w_c$. Although this is the desired result, a phase error e may exist between the output of oscillator 208 and the carrier frequency $w_c$. In this situation, the output of mixer 204 is the following I-channel baseband signal:

$$EQ - 13 \qquad B_I(t) = \cos\{w_ct + [P_m(t) + e]\}\cdot\cos w_ct$$

Using fundamental trigonometric identities for the product of two cosine functions, this equation can be rewritten as follows:

$$EQ - 14 \qquad B_I(t) = \cos[P_m(t) + e] + \cos\{2w_ct + [P_m(t) + e]\}$$

(A factor of 1/2 has been ignored in the above equation.)

As before, the $\cos\{2w_ct + [P_m(t) + e]\}$ component is filtered out by low pass filter 212. Thus, equation EQ-14 reduces to:

$$EQ - 15 \qquad B_I(t) = \cos[P_m(t) + e]$$

Using fundamental trigonometric identities for the cosine of the sum of two angles, equation EQ-15 can be re-written as follows:

$$EQ - 16 \qquad B_I(t) = \cos P_m(t)\cdot\cos(e) - \sin P_m(t)\cdot\sin(e)$$

Recall from equations EQ-11 and EQ-12 that $\cos P_m(t)$ and $\sin P_m(t)$ are the in-phase I(t) and quadrature phase Q(t) signal components, respectively. Thus, equation EQ-16 can be re-written as follows:

$$* \qquad EQ - 17 \qquad B_I(t) = I(t)\cdot\cos(e) - Q(t)\cdot\sin(e)$$

An examination of the above equation indicates that the I channel baseband signal $B_I(t)$ includes both in-phase I(t) and quadrature phase Q(t) components of the received signal when there is a phase error e between the output of oscillator 208 and the carrier of the received signal.

The Q-channel baseband signal $B_Q(t)$ (the output of filter 214) can be calculated in a similar manner as above. This signal can be described by the following equation:

$$* \qquad EQ - 18 \qquad B_Q(t) = Q(t)\cdot\cos(e) + I(t)\cdot\sin(e)$$

Thus, when oscillator 208 is not phase locked to the carrier of the received signal, the I and Q channel baseband signals include both in-phase I(t) and quadrature phase Q(t) components. When e = 0°, however, $B_I(t) = I(t)$ and $B_Q(t) = Q(t)$.

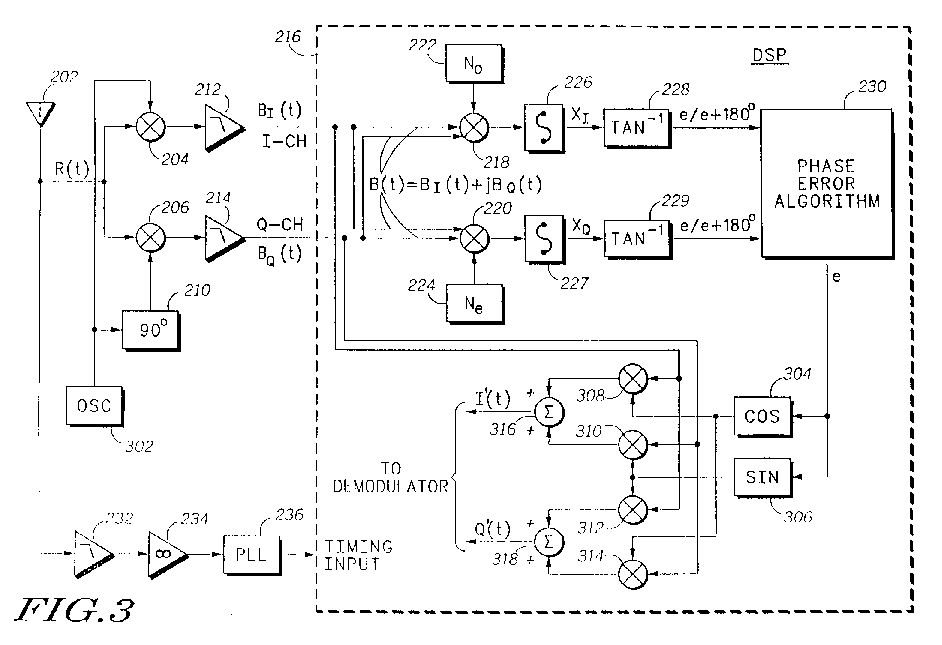

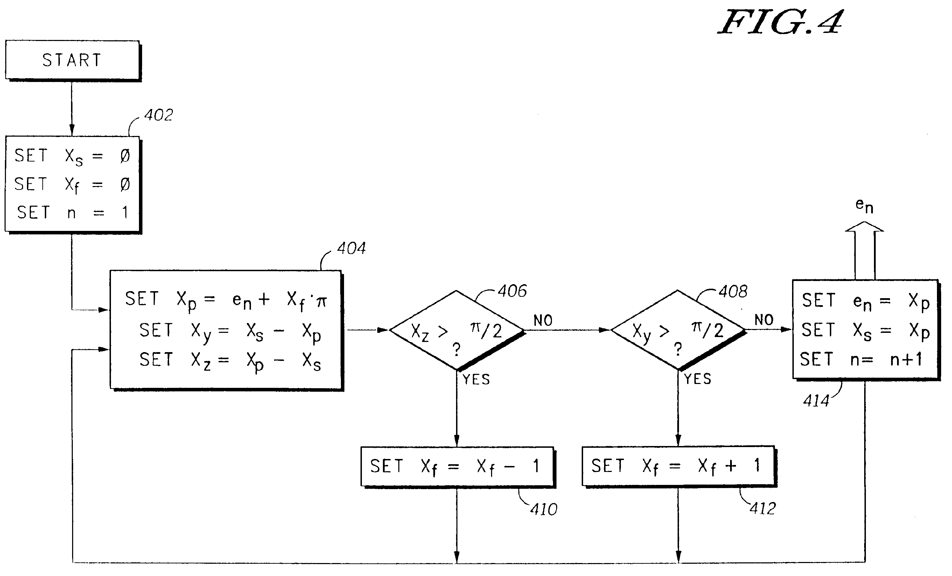

In the preferred embodiment, the output of filters 212 and 214 are coupled (for example, by non-illustrated digital to analog converters) to a digital signal processor 216. The elements illustrated within the DSP are analogs of the operations that are performed by the processor and its associated software. The software to perform these functions will depend on the particular DSP selected. The particular code for the selected processor can easily be written by one skilled in the art using the analog diagram of Fig. 2 or Fig. 3, the flow chart of Fig. 4, and the following description.

To understand the operations that occur within the DSP, it is useful to view the I and Q channel baseband signals as a single baseband signal which can be expressed mathematically as a complex number; the I-channel baseband signal (the output of filter 212) forming the real (Re) part of the number, and the Q-channel baseband signal (the output of filter 214) forming the imaginary part (Im). Thus, the baseband signal B(t) is defined as follows:

$$EQ - 19 \qquad B(t) = B_I(t) + jB_Q(t)$$

The baseband signal B(t) is multiplied by an "odd" orthogonal function $N_o$ in multiplier block 218, and by an "even" orthogonal function $N_e$ in multiplier block 220. These two functions are identical, except that the odd function $N_o$ begins at odd numbered bits of the received signal, while the even function $N_e$ begins at even numbered bits, as illustrated in Figs 1-G and 1-H, respectively. Both orthogonal functions are repeated every two bit periods. The preferred orthogonal function is:

$$\text{EQ-20} \qquad N(t) = \frac{\sin\left(2\pi t/T\right)}{\left(2\pi t/T\right) - \left[(K)(\text{sgn } t)\left(\pi t/2T\right)^2\right]} \qquad -T \leq t \leq T$$

wherein K is a constant. K is preferably 0.90959, although values of K that are equal to or greater than 0, but less than or equal to 2 are also suitable. Values of K greater than 2, but less than or equal to 2.5 provide marginal performance. Above 2.5, there are an infinite number of very sharply defined values of K that may also be suitable. Other orthogonal functions may also be suitable. In the above equation, "sgn t" is the algebraic sign of "t". "T" is the bit period of the received MSK transmission, and "t" is time.

For simplicity, equation EQ-20 only defines the preferred orthogonal function between the times -T and +T. In practice, this function is generated every odd and even numbered two bit period. When generating the orthogonal function for a given two bit period, the function defined by equation EQ-20 is shifted in time such that it begins at the beginning and ends at the end of the particular two bit period. This principle is illustrated in Figs. 1-G and 1-H wherein the orthogonal functions for the odd two bit period $t_3 - t_5$ and the even two bit period $t_4 - t_6$ are illustrated, respectively.

The outputs of multiplier blocks 218 and 220 are then integrated over a two bit period in blocks 226 and 227, respectively. As with the odd orthoganal function $N_o$, the integration period for block 226 begins at every odd numbered bit and ends two bit periods later. Similarly, the integration period for block 227 begins on even numbered bits and ends two bits later. Thus, the output of integration blocks 218 and 220 are defined to be $X_I$ and $X_Q$, respectively, and these outputs have the following values:

$$\text{EQ-21(A)} \qquad X_I = \int_{\tau = t_n}^{t_{n+2}} N_o(\tau)\left[B_I(\tau) + jB_Q(\tau)\right]d\tau$$

(n = odd integer)

$$\text{EQ-21(B)} \qquad X_Q = \int_{\tau = t_n}^{t_{n+2}} N_e(\tau)\left[B_I(\tau) + jB_Q(\tau)\right]d\tau$$

(n = even integer)

Collectively, blocks 218, 220, 222, and 224 provide a means for multiplying the baseband signal by an orthogonal function, while blocks 226 and 227 provide a means for integrating the product of the baseband signal and the orthogonal function. More specifically, blocks 218 and 222 provide a means for multiplying the baseband signal by an odd orthogonal function and block 226 provides a means for integrating the product of the baseband signal and the odd orthogonal function over an odd numbered two bit period. Similarly, blocks 220 and 224 provide a means for multiplying the baseband signal by an even orthogonal function and block 227 provides a means for integrating the product of the baseband signal and the even orthogonal function over an even numbered two bit period.

Recall that equations EQ-17 and EQ-18 describe the I-channel and Q-channel baseband signals $B_I(t)$ and $B_Q(t)$, respectively. These baseband signals include both in-phase I(t) and quadrature phase Q(t) components when there is a phase error e between the output of oscillator 208 and the carrier of the received MSK signal. If a phase error e exists, any quadrature phase component Q(t) present in the baseband signal $B_I(t) + jB_Q(t)$ will integrate out to zero when processing the baseband signal according to equation EQ-21(A). Thus, the quadrature signal component Q(t) can be ignored in equations EQ-17 and EQ-18 for the purpose of calculating equation EQ-21(A). The result of processing the baseband signal according to equation EQ-21 (A) is a single complex number $X_I$ (one number every odd numbered bit) which is dependent only on the in-phase component I(t). Setting Q(t) = 0 and substituting equations EQ-17 and EQ-18 for $B_I(t)$ and $B_Q(t)$ in equation EQ-21(A) yields the following:

$$\text{EQ-22(A)} \qquad X_I = \int_{\tau = t_n}^{t_{n+2}} N_o I(\tau) \cos(e) \, d\tau + j \int_{t=t_n}^{t_{n+2}} N_o I(\tau) \sin(e) \, d\tau$$

(n = odd integer)

Similarly, the in-phase component I(t) integrates out to zero and can be ignored for the purpose of calculating equation EQ-21(B). Thus, the result of processing the baseband signal according to equation EQ-21(B) is a single complex number $X_Q$ (one every even numbered bit) which is dependent only on the quadrature component Q(t). Setting I(t) = 0 and substituting equations EQ-17 and EQ-18 for $B_I(t)$ and $B_Q(t)$ in equation EQ-21 (B) yields the following:

$$\text{EQ-22(B)} \qquad X_Q = - \int_{\tau = t_n}^{t_{n+2}} N_e Q(\tau) \sin(e) \, d\tau + j \int_{\tau = t_n}^{t_{n+2}} N_e Q(\tau) \cos(e) \, d\tau$$

(n = even integer)

It is convenient to define the variables $A_I$ and $A_Q$ as follows:

$$\text{EQ-23(A)} \qquad A_I = \int_{\tau = t_n}^{t_{n+2}} N_o I(\tau) \, d\tau$$

$$\text{EQ-23(B)} \qquad A_Q = \int_{\tau = t_n}^{t_{n+2}} N_e Q(\tau) \, d\tau$$

Assuming that the phase error e is constant over the two bit integration period and substituting $A_I$ or $A_Q$ for the corresponding integral, equations EQ-22(A) and EQ-22(B) reduce to the following:

$$\text{EQ - 24(A)} \qquad X_I = A_I \cdot \cos(e) + j \cdot A_I \cdot \sin(e)$$
$$\text{EQ - 24(B)} \qquad X_Q = - A_Q \cdot \sin(e) + j \cdot A_Q \cdot \cos(e)$$

The DSP calculates $X_I$ at every odd numbered bit and $X_Q$ at every even numbered bit. In other words, the values of $A_I \cdot \cos(e)$ and $A_I \cdot \sin(e)$ are known at every odd numbered bit, and $-A_Q \cdot \sin(e)$ and $A_Q \cdot \cos(e)$ are known at every even numbered bit. Since the tangent of an angle is equal to the sine of the angle divided by its cosine, the phase error e can be calculated at odd numbered bits by computing the inverse tangent of the imaginary part of equation EQ-24(A) divided by the real part. Similarly, the phase error e can be calculated at even numbered bits by computing the inverse tangent of minus (-) the real part of equation EQ-24(B) divided by the imaginary part. In mathematical terms:

$$\text{EQ-25(A)} \qquad e_I = \text{TAN}^{-1} \left[ \frac{\text{Im}(X_I)}{\text{Re}(X_I)} \right]$$

$$\text{EQ-25(B)} \qquad e_Q = \text{TAN}^{-1} \left[ \frac{-\text{Re}(X_Q)}{\text{Im}(X_Q)} \right]$$

The operations described in equations EQ-25(A) and EQ-25(B) are performed in blocks 228 and 229, respectively. Unfortunately, each of these operations theoretically computes two supplementary angles (i.e., separated by 180°), one of which is the phase error between the received MSK signal and the output of oscillator 208. Thus, blocks 228 and 229 provide a means for calculating two supplementary angles from the integral of the product of the baseband signal and the orthogonal function. It should be understood, however, that it is not necessary for this angle computing means to actually compute both angles. Since one angle is the supplement of the other, the second angle can be computed from the first by merely adding or subtracting 180°. Furthermore, it is not necessary that the computation of the supplementary angle be performed in blocks 228 and 229. In the preferred embodiment, the supplementary angles are actually computed in block 230, which is described below.

This ambiguity in the phase is not unexpected, however, since the DSP does not know at this point in the process whether the present bit of the received message is a binary 1 or a binary 0. To resolve which one of these two supplementary angles is the actual phase error, a phase error algorithm 230 compares the two supplementary angles theoretically computed from equation EQ-25(A) or EQ-25(B) and selects the one that is closer to the phase error that was computed for the previous bit. Thus, phase error algorithm 230 provides a means for resolving this phase ambiguity, i.e., which one of the supplementary angles is the phase error between the carrier of the MSK transmission and the output of the oscillator.

The flow chart for the preferred phase error algorithm is illustrated in Fig. 4. At this point in the process, it is unimportant whether the phase error was calculated on an odd bit ($e_I$) or on even bit ($e_Q$), and the phase error e for the $n^{th}$ bit of the received MSK signal is simple referred to as $e_n$. Furthermore, even though equations EQ-25(A) and EQ-25(B) theoretically compute two supplementary angles, only one of these two angles (preferrably the acute angle) needs to be calculated. Thus, in practice, the output of blocks 228 and 229 (the input to phase error algorithm 230) is a single acute (specifically, $-90° \le e_n \le 90°$) angle $e_n$ from which the phase error algorithm can calculate the supplement simply by adding or subtracting 180°.

Referring to Fig. 4, the variables $X_s$, $X_f$ and n are initialized in block 402 to the values 0, 0 and 1, respectively. Block 402 is only executed to set the values of $X_s$, $X_f$ and n for the first bit of the received MSK message. For all subsequent bits, however, the values of $X_s$, $X_f$ and n are set elsewhere in the program. In block 404, the variables $X_p$, $X_y$ and $X_z$ are calculated as follows: $X_p = e_n + X_f \cdot 180°$; $X_y = X_s - X_p$; and $X_z = X_p - X_s$, $X_s$ is the phase error of the previously received bit of the MSK message and its value is arbitrarily set to zero in initialization block 402 for the first bit of the received MSK signal. n represents the "$n^{th}$" bit of the received MSK signal. $X_p$ is a dummy variable that can be set equal to the angle $e_n$ or one its supplements ($X_f$ can assume the values -1, 0, and 1). $X_y$ is equal to the difference between the phase error $X_s$ of the previously received bit and the phase angle of the present bit $e_n$ (or one of its supplements). $X_z$ is simply $-X_y$.

The difference between the phase error of the previous bit of the received MSK signal and $X_p$ is tested in blocks 406 and 408. If this difference is greater than 90° and less than -90°, the value of $X_f$ is adjusted in step 410 or 412. The values of $X_p$, $X_y$ and $X_z$ are then recalculated in step 404. If the difference between the phase error of the previous bit and $X_p$ is less than 90° but greater than -90°, $X_p$ is the actual phase error $e_n$ of the present bit and the program passes through steps 406 and 408 to step 414. In step 414, the resolved phase error $e_n$ is passed on to the next circuit (for example, to the control input of the VCO in Fig. 2), the variabie $X_s$ is set equal to the resolved phase error, and n is incremented in preparation for the next angle from block 228 or 229.

Returning to Fig. 2, a well known discriminator 232, limiter 234 and phase locked loop 236 provide a timing signal to the DSP at the "zero crossings" of the received signal R(t). This permits the DSP to start and stop the generation of the orthogonal functions $N_o$ and $N_e$, and to start and stop the integration periods of integration blocks 226 and 227 at the proper times.

Once the correct phase error e has been calculated, it can be used to adjust the phase of oscillator 208 so that the phase of its output signal is substantially identical to the phase of the received MSK signal. Thus, in the embodiment of Fig. 2 (and in the embodiment of Fig. 3, described below), blocks 218, 220, 222, 224, 226, 227, 228, 229 and 230 provide a phase error means for determining the phase error between the carrier of an MSK transmission and the output of the oscillator in the quadrature circuit. If oscillator 208 is a conventional analog VCO, the phase error signal e can be coupled to the control input of the VCO through a non-illustrated digital to analog converter. Once the phase of oscillator 208 has been synchronized to the phase of the carrier of the received MSK signal, the I and Q channel baseband signals (the outputs of filters 212 and 214) can be coupled to a non-illustrated quadrature MSK demodulator. Such demodulators are well know in the art.

A second embodiment of the invention is illustrated in Fig. 3. Referring to this figure, antenna 202, mixers 204 and 206, phase shifter 210 and filters 212 and 214 are as described with reference to Fig. 2. Oscillator 302, however, is not a phase controlled oscillator, as was oscillator 208 of Fig. 2. Instead, oscillator 302 may

EP 0 434 689 B1

be any well known oscillator having an output frequency approximately equal to the carrier frequency of the received MSK signal. In addition, multipliers 218 and 220, orthogonal functions 222 and 224, integrators 226 and 227, and phase error algorithm 230 are also as decribed above with reference to Fig. 2.

The primary distinction between these two embodiments is that the phase error e is not utilized in the embodiment of Fig. 3 to adjust the phase of the local oscillator (208) of the quadrature circuit, as it was in the embodiment of Fig. 2. Instead, the cosine and sine of the phase error e are computed in blocks 304 and 306, respectively. The cosine of the phase error e is then multiplied by the I-channel signal and the Q-channel signal in multiplier blocks 308 and 314, respectively. Similarly, the sine of the phase error e is multiplied by the Q-channel signal and the I-channel signal in multiplier blocks 310 and 312, respectively. The output of multiplier blocks 308 and 310 are then summed in block 316, the output of which is a corrected I-channel signal I'(t). Similarly, the output of multiplier blocks 312 and 314 are summed in block 318, the output of which is a corrected Q-channel signal Q'(t). Thus, blocks 304, 306, 308, 310, 312, 314, 316, and 318 provide a correction means for generating a corrected baseband signal. This corrected baseband signal includes a corrected I-channel componet in which any quadrature component of the MSK transmission is substantuilly attenuated, and a corrected Q-channel component in which any in-phase component is substantially attenuated. The corrected I-channel I'(t) and corrected Q-channel Q'(t) signals are then coupled to the non-illustrated quadrature MSK demodulator that was described above with reference to Fig. 2.

In the embodiment of Fig. 3, the timing for DSP 216 is established by discriminator 232, limiter 234 and PLL 236, as described above with reference to the embodiment of Fig. 2.

Although the preferred embodiments illustrated in Figs. 2 and 3 utilize a digital signal processor, the invention may also be practiced by implementing the functions that are performed by the DSP with digital or analog hardware. Similarly, if the frequency of the received MSK signal (or the IF frequency output of the receiver front end descibed above) is low enough, mixers 204 and 206, oscillator 208 or 302, phase shifter 210, and low pass filters 212 and 214 could be implemented using digital circuitry, or the received MSK signal can be digitized and these functions can be performed in the DSP.

## Claims

1. A phase error circuit for a receiver circuit for receiving an MSK transmission and for use with a quadrature circuit (204 - 214) having a baseband signal output and including an oscillator, comprising:

   multiplication/integration means for multiplying (218, 220, 226, 227) said baseband signal by an orthogonal function and for integrating the product of said baseband signal and said orthogonal function:

   characterized by

   angle computing means (228, 229) for computing two supplementary angles from the integral of the product of said baseband signal and said orthogonal function; and

   resolving means (230) for resolving which one of said two supplementary angles is the phase error between the carrier of said MSK transmission and the output of said oscillator, and said resolving means including means for determining the particular one of said two supplementary angles that is closer to the phase error of the previously received bit of said MSK transmission.

2. A receiver circuit for receiving an MSK transmission, comprising in combination:

   a quadrature circuit (204 - 214) having a baseband signal output and including an oscillator (208) having a controlled input for controlling the phase of the signal generated by said oscillator; and

   phase error means (216), coupled between said quadrature circuit and said control input of said oscillator, for determining the phase error between the carrier of said MSK transmission and the signal generated by said oscillator, such that the phase of said oscillator is adjusted by said phase error means to reduce said phase error, said phase error means comprising:

   multiplication/integration means (218, 220, 226, 227) for multiplying said baseband signal by an orthogonal function and for integrating the product of said baseband signal and said orthogonal function:

   characterized by

   angle computing means (228, 229) for computing two supplementary angles from the integral of the product of said baseband signal and said orthogonal function; and

   resolving means (230) for resolving which one of said two supplementary angles is the phase error between the carrier of said MSK transmission and the output of said oscillator, and said resolving means including means for determining the particular one of said two supplementary angles that is closer to the phase error of the previously received bit of said MSK transmission.

3. A receiver circuit for receiving an MSK transmission and for use with a quadrature circuit (204 - 214) having a baseband signal output and including an oscillator (208), said receiver circuit comprising in combination:
    phase error means (216), coupled to said quadrature circuit, for determining the phase error between the carrier of said MSK transmission and the signal generated by said oscillator; and
    correction means (304 - 318) coupled to said phase error means, for generating a corrected baseband signal, said corrected baseband signal including a corrected I-channel signal in which any quadrature phase component of said MSK transmission is substantially attenuated, and further including a corrected Q-channel signal in which any in-phase component of said MSK transmission is substantially attenuated, said phase error means including:
    multiplication/integration means (218, 220, 226, 227) for multiplying said baseband signal by an orthogonal function and for integrating the product of said baseband signal and said orthogonal function;
        characterized by
    angle computing means (228, 229) for computing two supplementary angles form the integral of the product of said baseband signal and said orthogonal function; and
    resolving means (230) for resolving which one of said two supplementary angles is the phase error between the carrier of said MSK transmission and the output of said oscillator, and said resolving means including means for determining the particular one of said two supplementary angles that is closer to the phase error of the previously received bit of said MSK transmission.

4. The circuit of claim 1, 2 or 3, wherein:
    said multiplication/integration means includes means (218, 226) for multiplying said baseband signal by an odd bit orthogonal function and for integrating the product of said baseband signal and said odd bit orthogonal function over an odd numbered two bit period of said MSK transmission, and means (220, 227) for multiplying said baseband signal by an even bit orthogonal function and for integrating the product of said baseband signal and said even bit orthogonal function over an even numbered two bit period of said MSK transmission.

5. The circuit of claim 4, wherein said angle computing means includes:
    means for determining $TAN^{-1}(X_I)$, wherein $X_I$ is the integral of the product of said baseband signal and said even bit orthogonal function over said even numbered two bit period.

6. The circuit of claim 1, 2 or 3, wherein said orthogonal function includes the function
    $$sin(2\pi t/T) / \{(2\pi t/T - [K \; sgn(t). (\pi t/2T)^2]\},$$
    wherein T is the bit period of the MSK transmission, t is time and K is a constant.

7. The circuit of claim 6, wherein $0 \leqq K \leqq 2$.

**Patentansprüche**

1. Phasenfehlerschaltung für eine Empfängerschaltung zum Empfangen einer MSK-Übertragung und zur Verwendung mit einer Quadraturschaltung (204-214), welche einen Basisbandsignalausgang und einen Oszillator aufweist, mit:
    einer Multiplikations/Integrations-Einrichtung zum Multiplizieren (218-220, 226, 227) des Basisbandsignals mit einer orthogonalen Funktion, und zum Integrieren des Produkts des Basisbandsignals und der orthogonalen Funktion;
    gekennzeichnet durch
    eine Winkelberechnungseinrichtung (228, 229) zur Berechnung zweier Zusatzwinkel aus dem Integral des Produkts des Basisbandsignals und der orthogonalen Funktion; und
    eine Auflösungseinrichtung (230) zum Auflösen, welcher der beiden Zusatzwinkel der Phasenfehler zwischen dem Träger der MSK-Übertragung und dem Ausgang des Oszillators ist, wobei die Auflösungseinrichtung eine Einrichtung zur Bestimmung desjenigen von den beiden Zusatzwinkeln aufweist, der näher an dem Phasenfehler des vorher empfangenen Bits der MSK-Übertragung liegt.

2. Empfängerschaltung zum Empfangen einer MSK-Übertragung, welche in Kombination aufweist:
    eine Quadraturschaltung (204-214), die einen Basisbandsignalausgang und einen Oszillator (208) aufweist, der einen gesteuerten Eingang zum Steuern der Phase des von dem Oszillator erzeugten Signals aufweist; und

eine Phasenfehlereinrichtung (216), die zwischen die Quadraturschaltung und den Steuereingang des Oszillators geschaltet ist, um den Phasenfehler zwischen dem Träger der MSK-Übertragung und dem von dem Oszillator erzeugten Signal zu ermitteln, so daß die Phase des Oszillators durch die Phasenfehlereinrichtung so eingestellt wird, daß der Phasenfehler verringert wird, wobei die Phasenfehlereinrichtung aufweist:

eine Multiplikations/Integrations-Einrichtung (218, 220, 226, 227) zum Multiplizieren des Basisbandsignals mit einer orthogonalen Funktion und zum Integrieren des Produkts des Basisbandsignals und der orthogonalen Funktion;

gekennzeichnet durch

eine Winkelberechnungseinrichtung (228, 229) zum Berechnen zweier Zusatzwinkel aus dem Integral des Produkts des Basisbandsignals und der orthogonalen Funktion; und

eine Auflösungseinrichtung (230) zum Auflösen, welcher der beiden Zusatzwinkel der Phasenfehler zwischen dem Träger der MSK-Übertragung und dem Ausgang des Oszillators ist, wobei die Auflösungseinrichtung eine Einrichtung zur Bestimmung desjenigen der beiden Zusatzwinkel aufweist, der näher an dem Phasenfehler des vorher empfangenen Bits der MSK-Übertragung liegt.

3.  Empfängerschaltung zum Empfangen einer MSK-Übertragung und zur Verwendung mit einer Quadraturschaltung (204-214), welche einen Basisbandsignalausgang und einen Oszillator (208) aufweist, wobei die Empfängerschaltung in Kombination aufweist:

eine Phasenfehlereinrichtung (216), die an die Quadraturschaltung angeschlossen ist, um den Phasenfehler zwischen dem Träger der MSK-Übertragung und dem von dem Oszillator erzeugten Signal zu bestimmen; und

eine Korrektureinrichtung (304-318), die an die Phasenfehlereinrichtung angeschlossen ist, zur Erzeugung eines korrigierten Basisbandsignals, wobei das korrigierte Basisbandsignal ein korrigiertes I-Kanal-Signal aufweist, in welchem jede Quadraturphasenkomponente der MSK-Übertragung wesentlich abgeschwächt ist, und weiterhin ein korrigiertes Q-Kanal-Signal aufweist, in welchem jede phasengleiche Komponente der MSK-Übertragung wesentlich abgeschwächt ist, wobei die Phasenfehlereinrichtung aufweist:

eine Multiplikations/Integrations-Einrichtung (218, 220, 226, 227) zum Multiplizieren des Basisbandsignals mit einer orthogonalen Funktion, und zum Integrieren des Produkts des Basisbandsignals und der orthogonalen Funktion;

gekennzeichnet durch

eine Winkelberechnungseinrichtung (228, 229) zum Berechnen zweier Zusatzwinkel aus dem Integral des Produkts des Basisbandsignals und der orthogonalen Funktion; und

eine Auflösungseinrichtung (230) zum Auflösen, welcher der beiden Zusatzwinkel der Phasenfehler zwischen dem Träger der MSK-Übertragung und dem Ausgang des Oszillators ist, wobei die Auflösungseinrichtung eine Einrichtung zur Bestimmung desjenigen der beiden Zusatzwinkel aufweist, der näher an dem Phasenfehler des vorher empfangenen Bits der MSK-Übertragung liegt.

4.  Schaltung nach Anspruch 1, 2 oder 3, bei welcher

die Multiplikations/Integrations-Einrichtung eine Einrichtung (218, 226) zum Multiplizieren des Basisbandsignals mit einer orthogonalen Funktion mit ungeradem Bit und zum Integrieren des Produkts des Basisbandsignals und der orthogonalen Funktion mit ungeradem Bit über eine ungeradzahlige Zwei-Bit-Periode der MSK-Übertragung aufweist, und eine Einrichtung (220, 227) zum Multiplizieren des Basisbandsignals durch eine orthogonale Funktion mit geradem Bit, und zum Integrieren des Produkts des Basisbandsignals und der orthogonalen Funktion mit geradem Bit über eine geradzahlige Zwei-Bit-Periode der MSK-Übertragung.

5.  Schaltung nach Anspruch 4, bei welcher die Winkelberechnungseinrichtung aufweist:

eine Einrichtung zur Bestimmung von $\mathrm{TAN}^{-1}$ $(X_I)$ wobei $X_I$ das Integral des Produkts des Basisbandsignals und der orthogonalen Funktion mit geradem Bit über die geradzahlige Zwei-Bit-Periode ist.

6.  Schaltung nach Anspruch 1, 2 oder 3, bei welcher die orthogonale Funktion die Funktion aufweist

$$\sin(2\pi t/T) / \{(2\pi t/T \ - \ [K \ \mathrm{sgn}(t) \ . \ (\pi t/2T)^2]\} \ ,$$

wobei T die Bitperiode der MSK-Übertragung ist, t die Zeit ist, und K eine Konstante.

7.  Schaltung nach Anspruch 6, bei welcher $0 \leqq K \leqq 2$ ist.

## Revendications

1. Circuit d'erreur de phase d'un circuit récepteur pour recevoir une émission MSK et pour être utilisé avec un circuit déphaseur (204 - 214) ayant une sortie de signal en bande de base et comportant un oscillateur, comprenant :

   des moyens de multiplication/intégration pour multiplier (218, 220, 226, 227) ledit signal en bande de base par une fonction orthogonale et pour intégrer le produit dudit signal en bande de base et de ladite fonction orthogonale ;

   caractérisés par des moyens de calcul d'angles (228, 229) pour calculer deux angles complémentaires à partir de l'intégrale du produit dudit signal en bande de base et de ladite fonction orthogonale ; et

   un moyen de détermination (230) pour déterminer lequel desdits deux angles complémentaires est l'erreur de phase entre la porteuse de ladite émission MSK et la sortie dudit oscillateur, et ledit moyen de détermination comprenant un moyen pour déterminer l'angle particulier desdits deux angles complémentaires qui est le plus proche de l'erreur de phase du bit reçu précédemment de ladite émission MSK.

2. Circuit récepteur pour recevoir une émission MSK, comprenant, en combinaison:

   un circuit déphaseur (204 - 214) ayant une sortie de signal en bande de base et comprenant un oscillateur (208) ayant une entrée commandée pour commander la phase du signal généré par ledit oscillateur ; et

   un moyen d'erreur de phase (216) couplé entre ledit circuit déphaseur et ladite sortie de commande dudit oscillateur, pour déterminer l'erreur de phase entre la porteuse de ladite émission MSK et le signal généré par ledit oscillateur, de sorte que la phase dudit oscillateur soit ajustée par ledit moyen d'erreur de phase pour réduire ladite erreur de phase, ledit moyen d'erreur de phase comprenant:

   des moyens de multiplication/intégration (218, 220, 226, 227) pour multiplier ledit signal en bande de base par une fonction orthogonale et pour intégrer le produit dudit signal en bande de base et de ladite fonction orthogonale;

   caractérisés par des moyens de calcul d'angles (228, 229) pour calculer deux angles complémentaires à partir de l'intégrale du produit dudit signal en bande de base et de ladite fonction orthogonale ; et

   un moyen de détermination (230) pour déterminer lequel desdits deux angles complémentaires est l'erreur de phase entre la porteuse de ladite émission MSK et la sortie dudit oscillateur, et ledit moyen de détermination comprenant un moyen pour déterminer l'angle particulier desdits deux angles complémentaires qui est le plus proche de l'erreur de phase du bit reçu précédemment de ladite émission MSK.

3. Circuit récepteur pour recevoir une émission MSK et pour être utilisé avec un circuit déphaseur (204 - 214) ayant une sortie de signal en bande de base et comportant un oscillateur (208), ledit circuit récepteur comprenant, en combinaison:

   un moyen d'erreur de phase (216) couplé audit circuit déphaseur pour déterminer l'erreur de phase entre la porteuse de ladite émission MSK et le signal généré par ledit oscillateur ; et

   des moyens de correction (304 - 318) couplés audit moyen d'erreur de phase pour générer un signal en bande de base corrigé, ledit signal en bande de base corrigé comprenant un signal de canal I corrigé dans lequel toute composante de phase en quadrature de ladite émission MSK est sensiblement atténuée, et comprenant, de plus, un signal de canal Q corrigé dans lequel toute composante en phase de ladite émission MSK est sensiblement atténuée, ledit moyen d'erreur de phase comprenant:

   des moyens de multiplication/intégration (218, 220, 226, 227) pour multiplier ledit signal en bande de base par une fonction orthogonale et pour intégrer le produit dudit signal en bande de base et de ladite fonction orthogonale;

   caractérisés par des moyens de calcul d'angles (228, 229) pour calculer deux angles complémentaires à partir de l'intégrale du produit dudit signal en bande de base et de ladite fonction orthogonale ; et

   un moyen de détermination (230) pour déterminer lequel desdits deux angles complémentaires est l'erreur de phase entre la porteuse de ladite émission MSK et la sortie dudit oscillateur, et ledit moyen de détermination comprenant un moyen pour déterminer l'angle particulier desdits deux angles complémentaires qui est le plus proche de l'erreur de phase du bit reçu précédemment de ladite émission MSK.

4. Circuit selon la revendication 1, 2 ou 3, dans lequel:

   lesdits moyens de multiplication/intégration comprennent des moyens (218, 226) pour multiplier ledit signal en bande de base par une fonction orthogonale à bit impair et pour intégrer le produit dudit signal en bande de base et de ladite fonction orthogonale à bit impair sur une période à deux bits impairs de ladite émission MSK, et des moyens (220, 227) pour multiplier ledit signal en bande de base par une fonction orthogonale à bit pair et pour intégrer le produit dudit signal en bande de base et de ladite fonction orthogonale à bit pair sur une période à deux bits pairs de ladite émission MSK.

5. Circuit selon la revendication 4, dans lequel lesdits moyens de calcul d'angles comprennent:
   un moyen pour déterminer $TAN^{-1}(X_I)$, où $X_I$ est l'intégrale du produit dudit signal en bande de base et de ladite fonction orthogonale à bit pair sur ladite période à deux bits pairs.

6. Circuit selon la revendication 1, 2 ou 3, dans lequel ladite fonction orthogonale comprend la fonction
   $$\sin(2\pi t/T) / \{(2\pi t/T - [K \, \text{sgn}(t) \cdot (\pi t/ 2T)^2]\},$$
   où T est la période binaire de l'émission MSK, t est le temps et K est une constante.

7. Circuit selon la revendication 6, dans lequel $0 \leqq K \leqq 2$.

FIG. 1A — RECEIVED SIGNAL

FIG. 1B — CARRIER ($w_C$)

FIG. 1C — BASEBAND MODULATION

FIG. 1D — MODULATION PHASE (Pm)

FIG. 1E — IN-PHASE SIGNAL [I(t)]

FIG. 1F — QUADRATURE PHASE SIGNAL [Q(t)]

FIG. 1G — ODD BIT ORTHOGONAL FUNCTION (No)

FIG. 1H — EVEN BIT ORTHOGONAL FUNCTION (Ne)

FIG.2

EP 0 434 689 B1

*FIG.3*

216 DSP

222 N₀

212 B_I(t) I-CH

226 X_I 228 TAN⁻¹ e/e+180°

230 PHASE ERROR ALGORITHM

218 B(t)=B_I(t)+jB_Q(t)

220 224 N_e 227 X_Q 229 TAN⁻¹ e/e+180°

214 Q-CH B_Q(t)

202

R(t)

204

206

210 90°

OSC 302

232 234 ∞ 236 PLL TIMING INPUT

TO DEMODULATOR

I'(t) 316 Σ 308 304 COS

310

Q'(t) 318 Σ 312 306 SIN

314

e

*FIG.4*

START

402
SET $X_s$ = Ø
SET $X_f$ = Ø
SET n = 1

404
SET $X_p$ = $e_n$ + $X_f \cdot \pi$
SET $X_y$ = $X_s$ - $X_p$
SET $X_z$ = $X_p$ - $X_s$

406
$X_z$ > $\pi/2$ ?   NO

YES

408
$X_y$ > $\pi/2$ ?   NO

YES

414
SET $e_n$ = $X_p$
SET $X_s$ = $X_p$
SET n = n+1

$e_n$

410
SET $X_f$ = $X_f$ - 1

412
SET $X_f$ = $X_f$ + 1